# EUROPÄISCHE PATENTSCHRIFT

(11) **EP 1 882 295 B1**
(45) Veröffentlichungstag und Bekanntmachung des Hinweises auf die Patenterteilung: **11.07.2012**
(21) Anmeldenummer: 06763130.9
(22) Anmeldetag: 12.05.2006
(51) Int. Cl.: H02K 7/08, B60T 8/40, F04B 17/03

(54) **ELEKTROHYDRAULISCHES AGGREGAT IN VERDICHTETER BAUWEISE**
ELECTROHYDRAULIC AGGREGATE WITH A COMPACT CONSTRUCTION
GROUPE ELECTROHYDRAULIQUE DE CONSTRUCTION COMPACTE

(30) Priorität: 13.05.2005 DE 102005023039; 30.07.2005 DE 102005035834
(43) Veröffentlichungstag der Anmeldung: 30.01.2008
(73) Patentinhaber: Continental Teves AG & Co. oHG, 60488 Frankfurt am Main (DE)
(72) Erfinder: DINKEL, Dieter, 65824 Schwalbach (DE); FEIGEL, Hans-Jörg, 61191 Rosbach (DE)
(74) Vertreter: Neumann, Stephan
(86) Internationale Anmeldenummer: PCT/EP2006/062276
(87) Internationale Veröffentlichungsnummer: WO 2006/120245

(56) Entgegenhaltungen:
- EP-A- 1 038 745
- WO-A-94/27045
- WO-A-98/36485
- WO-A-2005/031949

## Beschreibung

Die Erfindung betrifft ein elektrohydraulisches Aggregat nach dem Oberbegriff des Patentanspruchs 1.

Aus der DE 100 45 549 A1 ist ein Elektromotor bekannt geworden. Zur Reduktion der Baulänge des Elektromotors wird vorgeschlagen, dass der Rotor auf einer, dem Abtrieb abgewandten, Seite eine Aussparung aufweist, die einen Kommutator mit radial einwärts gerichteter, zylindrischer Kontaktfläche aufnimmt, und wobei radial auswärts gerichtete Kohlebürsten gehäusefest vorgesehen sind, deren Achse rechtwinklig in Relation zu einer durchgehenden Welle angeordnet ist. Auf diese Art und Weise wird es ermöglicht, die Kohlebürsten auf der dem Abtrieb abgewandten Seite gewissermaßen axial in der Aussparung von dem Rotor zu integrieren. Diese Maßnahme reduziert die axiale Motorbaulänge. Ein nachteiliger Effekt dieser Maßnahme besteht darin, dass der Durchmesser des Gleichstrommotors anwächst, weil der Durchmesser der Ausnehmung so dimensioniert sein muss, dass die Kohlebürsten mit voller Baulänge im Rotor integriert aufgenommen werden. Mit anderen Worten geht die vorteilhafte Reduktion in Axialrichtung zu Lasten eines vergrößerten Durchmessers. Die bekannte Maßnahme hat daher im wesentlichen eine Umverteilung zur Folge. Das Bauvolumen bleibt im wesentlichen konstant.

Nach der Beschreibungseinleitung der DE 100 45 549 A1 (Spalte 1, Zeilen 54 bis 61) stehen Bürstenmotoren mit parallel zu einer Welle angeordneten Kohlebürsten - beispielsweise entsprechend der japanischen Patentanmeldung Hei 10(1998)- 248225 - in dem Ruf, nur eine begrenzte Verkleinerung eines Aggregates zuzulassen. Aus diesem Grund werden Elektromotoren mit radial zur Wellenrichtung angeordneten Kohlebürsten bevorzugt.

Weiterhin ist aus der DE 100 45 549 A1 ein Elektromotor bekannt geworden, der radial gerichtete Bürsten in einer Ausnehmung des Rotors aufweist, um die Motorbaulänge zu verkürzen. Dieser Elektromotor leidet daran, dass der Bauraumgewinn in Axialrichtung durch eine Extension in Radialrichtung ermöglicht wird.

Aus der WO 98/40954 ist ein elektrohydraulisches Aggregat für eine Antiblockier-Bremsvorrichtung bekannt geworden, welches Mittel zur axial bewegbaren Halterung und Kontaktierung von Kohlebürsten für eine axiale Montage des Aggregates aufweist. Die Kohlebürsten beaufschlagen einen Axialkommutator. Der Motor verfügt über eine durchgehende Welle mit einem frei auskragenden Wellenende, welches einen Exzenter mit einem Excenterlager umfasst. Der Lagerung der Welle dient ein sogenanntes A-Lager, das in dem Aufnahmekörper aufgenommen ist, und ein sogenanntes B-Lager, welches von einem topfförmigen Motorgehäuse getragen wird.

Die EP 1 038 745 A2 offenbart ein elektrohydraulisches Aggregat der gattungsbildenden Art, dessen Elektromotor zur Rotorlagerung sowohl in einem Topf des Motorgehäuses als auch in einem das Motorgehäuse verschließenden Deckel jeweils ein Wälzlager aufweist, um die das Motordrehmoment übertragende Welle beidseitig des Rotors im Motorgehäuse zu lagern. Ein weiteres Wälzlager befindet sich außerhalb des Motorgehäuses am hervorstehenden Wellenende angebracht, das nach dem Anflanschen des Elektromotors an einem Aufnahmekörper über das weitere Wälzlager in einer Sackbohrung des Aufnahmekörpers gelagert ist. Die Welle weist eine entsprechend große Länge und träge Masse auf und ist in Verbindung mit ihrer dreifachen Lagerung nicht völlig frei von etwaigen unerwünschten Drehschwingungen und Geräuschen.

Ferner ist aus WO94/27045 ein elektrohydraulisches Aggregat mit einem Elektromotor bekannt, dessen Welle bei Bedarf an einem Topf eines Motorgehäuses als auch an einem das Motorgehäuse verschließenden Deckel gelagert ist, wozu der Deckel mit einem Wälzlager versehen ist und der Topf bedarfsweise zu Motortestzwecken ein zapfenförmiges Hilfslager aufweist, das in eine Sackbohrung am Wellenende eingreift. Der aus dem Motorgehäuse hervorstehende Wellenstumpf ist in einem weiteren Wälzlager gelagert, das entweder in einen für den Elektromotor vorgesehenen Aufnahmekörper eingesetzt oder auf den Wellenstumpf aufgepresst ist. Die Welle benötigt infolge der gewählten Bauform und Lagerung einen entsprechend großen Platzbedarf Länge und weist ein dementsprechendes Trägheitsmoment auf.

Es ist eine Aufgabe der vorliegenden Erfindung, ein elektrohydraulisches Aggregat in verdichteter Bauweise mit einem Elektromotor bereit zu stellen, dessen Baulängenverkürzung nicht mit dem Nachteil eines vergrößerten Motordurchmessers verknüpft ist. Weiterhin soll die Laufruhe des Aggegates unter Last, wie auch das Bauvolumen des Aggregates, bei besonders beanspruchungsgerechter und montagefreundlicher Konstruktion reduziert werden.

Die Aufgaben werden für ein elektrohydraulisches Aggregat der angegebenen Art durch die kennzeichnenden Merkmale des Patentanspruchs 1 gelöst.

Um die Welle und folglich die Motorbaulänge zu verkürzen, wird der Rotor - unter Umgehung der Welle - über eine gesonderte drehfeste Achse am Motorgehäuse abgestützt. Die Konstruktion ist mit dem Vorteil verknüpft, dass Welle und Achse unter besonders beanspruchungsgerechter Konstruktion verkürzt ausbildbar sind. Weil der Kraftfluß im Bereich vom B-Lager ohne die Welle abgeleitet wird, ergibt sich eine verkürzte und damit biegesteife sowie schwingungsarme Bauweise. Die Achse ist frei von irgendwelchen Torsionsbeanspruchungen.

Die Laufruhe und insbesondere auch der Verschleiß an einem Pumpenexcenter wird reduziert, indem zwischen A- und B-Lager ein Excenterlager vorgesehen ist, oder indem das Excenterlager an einem freien Ende neben dem B-Lager vorgesehen ist.

Um Taumelbewegung oder Durchbiegung am Excenter-Wellenende besser bekämpfen zu können, ist vorgesehen, dass das Excenterlager zwischen A- und B-Lager vorgesehen ist, und wobei das B-Lager ein Ende der Welle abstützt, und dass unmittelbar neben dem Excenterlager ein zusätzliches Stützlager vorgesehen ist, das in dem Aufnahmekörper abgestützt ist.

Die konkrete Wahl der Lager hat in Abhängigkeit von den technischen Randbedingungen zu erfolgen. Excenterlager sowie A- und B-Lager können entweder homogen oder wechselweise unterschiedlich als Wälzlager und/oder als Gleitlager ausgebildet sein. Wälzlager ermöglichen prinzipiell geringe Reibungsverluste und Gleitlager ermöglichen hohe Tragzahlen bei ausgesprochener Robustheit aber erhöhten Anforderungen an die Montagepräzision.

Die konstruktiven Maßnahmen in bezug auf die drehfeste Achse sind in Außenansicht des Aggregates nicht ohne weiteres erkennbar. Denn die Achse ist an einem Topfboden vom Motorgehäuse angeordnet, und weist in Richtung Topfinneres. Indem die Achse in Axialrichtung in einer Ausnehmung von dem Rotor integriert vorgesehen ist, ist die Baulänge reduziert. Gleichzeitig ist sicher gestellt, dass die Achs-Aufnahme in Bezug auf die Umgebung nicht über eine Ebene übersteht, welche von einer weitgehend planen Aufstandsfläche des Motorgehäuse definiert wird. Mit anderen Worten ist der Topfboden des Motorgehäuse weitgehend plan ausgestaltet und weist jedenfalls keine auffälligen Auswölbungen nach außen auf.

Bei einer vorteilhaften Ausführungsform der Erfindung ist die Achse als gesondertes Bauteil ausgebildet. Zwecks Befestigung weist das Motorgehäuse eine Aufnahme für die Achse auf. Die Achse ist in die Aufnahme eingepresst, eingeklebt oder eingeschweißt. Diese Bauweise ist mit dem Vorteil verknüpft, dass die Achse ohne weiteres aus einem hochfesten Werkstoff ausbildbar ist, wobei beispielsweise Wälzkörper von dem B-Lager unmittelbar auf dem Umfang der Achse laufen.

Folgende Gestaltung ist für das Einführen der Achse in deren Aufnahme vorteilhaft. Die Aufnahme verfügt über eine zylindrische Wandung und einen Boden, an dem die Achse nach vollendetem Einführprozess zur Anlage gelangt. Der Boden weist wenigstens ein Durchgangsloch auf, damit eingeschlossene Luft entweichen kann.

Bei einer anderen Ausführungsform der Erfindung ist die Achse einstückig als hohles Ziehteil am Motorgehäuse ausgebildet, indem ein Boden des Motorgehäuse zumindest teilweise zu einem Napf umgeformt ist, welcher konzentrisch zu einer Wandung des Motorgehäuse verläuft. Dadurch kann die Achse gewissermaßen als Nebenprodukt bei der Formgebung des Motorgehäuse erzeugt werden. Prinzipiell ist es denkbar, nur den Werkstoff der Achse punktuell zu härten, damit dieser mit den Lagerkräften beaufschlagbar ist. Eine andere Lösung beruht auf einer weitgehend zylindrischen Abdeckung aus hartem Werkstoff, welche auf die Achse aufgefädelt wird, bevor der Rotor mit dem B-Lager in den Stator geschoben wird.

Die baulängenreduzierte Lösung wird weiter verbessert, indem der Rotor einen Wicklungsträger mit einer Aufnahme für das B-Lager aufweist, wobei das B-Lager in Axialrichtung im wesentlichen vollständig in dem Wicklungsträger integriert vorgesehen ist.

Um die Masse des Gleichstrommotors bei gegebener Stabilität zu verringern, wird in weiterhin vorteilhafter Weise vorgeschlagen, den Wicklungsträger aus einem Sinterwerkstoff mit geringer Dichte auszubilden. Diese Maßnahme reduziert Trägheits- und Unwuchteffekte nachhaltig. Eine weiter verringerte Masse des Gleichstrommotors ist erzielbar, wenn die Welle zusammen mit dem Wicklungsträger einteilig ausgebildet ist, und aus dem Sinterwerkstoff besteht.

Wie eine vorteilhaft verdichtete Ausführungsform der Erfindung weiterhin zeigt, weist der Rotor einen Axialkommutator auf, wobei der Axialkommutator von Kohlebürsten kontaktiert wird, welche parallel zu der Achse in Köchern in der wenigstens einen Durchgangsbohrung angeordnet sind. Die Köcher können fest an einer elektronischen Regeleinheit des Aggregates angeordnet sein, oder sie sind an einer, aus Kunststoffwerkstoff gefertigten, Grundplatte des Motors vorgesehen. Weil die Wirksamkeit von Entstörmitteln mit steigender Entfernung von den Kohlebürsten tendenziell abnimmt, ist es von Vorteil, wenn die Köcher integrierte Entstörmittel beinhalten, wie insbesondere Entstörspulen oder Kondensatoren.

Die Herstellung des Gleichstrommotors wird vereinfacht, wenn der Axialkommutator aus wenigstens zwei Bauteilen zusammen gefügt ist, wobei Kommutatorhaken für Wicklungen und Kommutatorlamellen für Kohlebürsten an voneinander trennbaren sowie mittels stecken miteinander elektrisch zusammenfügbaren Bauteilen vorgesehen sind. Dadurch wird es ermöglicht, mit Priorität zunächst die Wicklungen auf den Wicklungsträger aufzubringen, und deren Drahtenden elektrisch mit Kommutatorhaken zu verbinden. In einem nachgeschalteten Schritt wird das Bauteil mit den Kommtatorlamellen für die Kohlebürsten auf das Bauteil mit den Kommutatorhaken gesteckt, wobei gleichzeitig die gewünschte elektrische Verschaltung zwischen den beiden Bauteilen erfolgt.

Weitere Einzelheiten der Erfindung gehen aus der Zeichnung anhand der Beschreibung hervor. In der Zeichnung zeigt jeweils stark vergrößert:
Fig. 1 ein verdichtetes elektrohydraulisches Aggregat gemäß einer ersten Ausführungsform im Schnitt,
Fig. 2 eine zweite Ausführungsform im Schnitt,
Fig. 3 eine dritte Ausführungsform im Schnitt,
Fig. 4 Einzelheiten eines Kohlebürstenköchers im Schnitt,
Fig. 5 Schnitt entlang Linie VII-VII in Fig. 1,
Fig. 6 ein bekanntes elektrohydraulisches Aggregat gemäß WO 98/40954 zu Erläuterungszwecken.

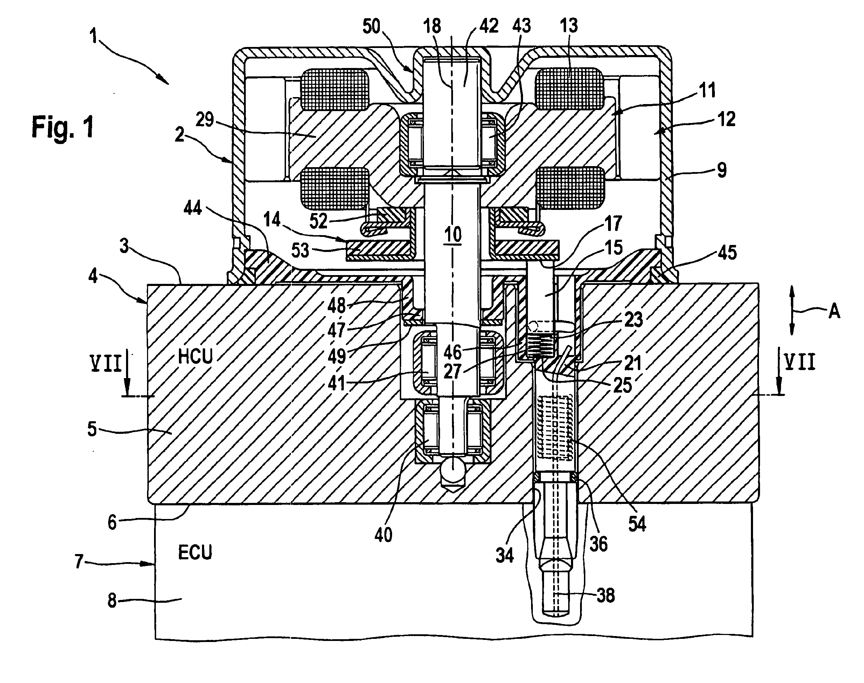

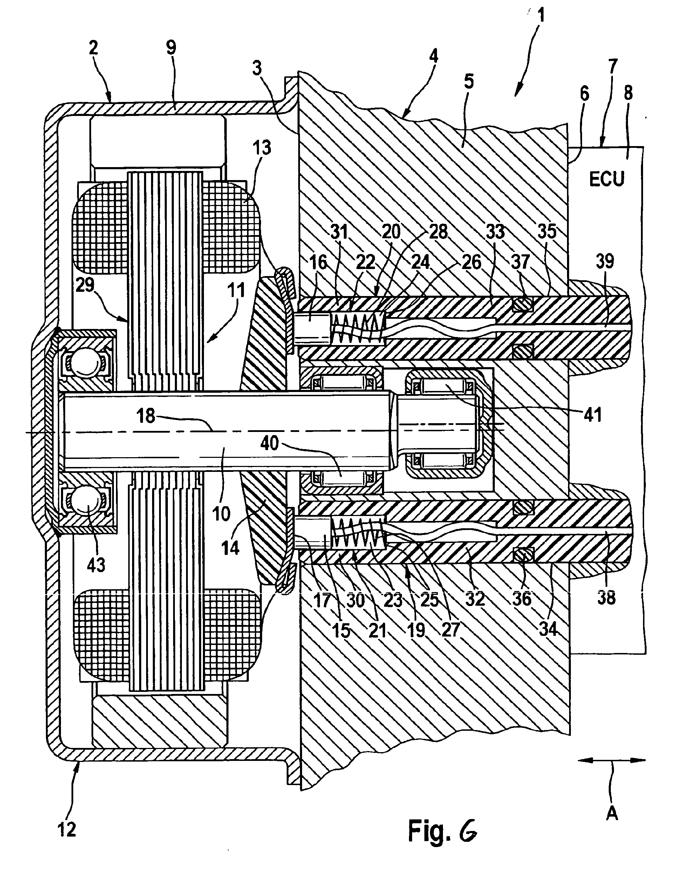

Die Erfindung hat eine Verbesserung bekannter elektrohydraulischer Aggregate zum Gegenstand, und geht im Einzelnen aus den Fig. 1 bis 5 hervor. Für den grundsätzlichen Aufbau eines bekannten elektrohydraulischen Aggregates wird an dieser Stelle auf den Offenbarungsgehalt der WO 98/40954 entsprechend Fig. 6 verwiesen.

Zur Erläuterung prinzipieller Zusammenhänge bei elektrohydraulischen Aggregaten wird daher zunächst auf Fig. 6 eingegangen. Das elektrohydraulische Aggregat 1 dient zur hydraulischen Energieversorgung einer Kraftfahrzeug-Antiblockier-Bremsvorrichtung. Das Aggregat umfasst einen Elektromotor 2, welcher an einer ersten Seite 3 eines Aufnahmekörpers 4 (HCU) mit elektrohydraulischen Ventilen und mit einem Gehäuse 5 für eine Kolbenpumpe angeordnet und befestigt ist. An einer anderen, zweiten Seite 6 des Aufnahmekörper 4 ist eine Elektronikeinheit 7 (ECU) mit einem Gehäuse 8 angeordnet und befestigt. Diese dient im wesentlichen der Ansteuerung von nicht gezeichneten Magnetventilen zur Modulation des Bremsdruckes in Bremseinheiten, wie auch zur elektrischen Versorgung von dem Elektromotor 2. Der Elektromotor 2 verfügt über einen Stator 12 mit einem topfförmigen Motorgehäuse 9 umfassend Magnete und einen Rotor 11 mit einer Welle 10. Zur Lagerung des Rotors dienen beabstandete Lager, wobei es sich eingebürgert hat, ein abtriebsseitiges Lager als A-Lager 40 zu bezeichnen, während das motorgehäuseseitige Lager mit B-Lager 43 bezeichnet ist. Ein wellenfester Excenter ist von einem Excenterlager 41 umgeben. Der Rotor 11 verfügt weiterhin über einen Wicklungsträger 29, der die Wicklungen 13 aufweist. Ein Kommutator 14 ist drehfest auf der Welle 10 angeordnet. Der Kommutator 14 ist scheibenförmig, mit Lamellensegmenten ausgestattet, und wird in Axialrichtung A - das heißt parallel zu der Welle 10 - von Kohlebürsten 15,16 federnd beaufschlagt. Der Durchmesser des Kommutators 14 ist größer als dessen Baulänge. Seine Kontaktfläche 17 ist in axialer Richtung wirksam und erstreckt sich rechtwinklig zu der Drehachse 18 des Elektromotors 2. Es sind Mittel 19,20 zur axial bewegbaren Halterung und Kontaktierung der Kohlebürsten 15,16 zwecks axialer Montage des Aggregates 1 vorgesehen. Wie die Fig. 1 zeigt, sind die Mittel 19,20 einander diametral gegenüberliegend an der Elektronikeinheit 7 vorgesehen, so dass diese zusammen mit den Kohlebürsten 15,16 eine elektrische Baueinheit bildet. Die Kohlebürsten 15,16 liegen im Aufnahmekörper 4, so dass der Elektromotor 2 um das Maß der Kohlebürsten 15, 16 verkürzt ist. Neben den Kohlebürsten 15,16 ist eine Kontaktierung zusätzlicher elektrischer Bauteile des Elektromotors 2 nicht zwingend erforderlich. Als Mittel 19,20 weist die Elektronikeinheit 7 zwei achsparallel zu der Drehachse 18 wirksame Kohlebürstenköcher 21,22 für die Kohlebürsten 15,16 auf. Jeder Kohlebürstenköcher 21,22 weist axial auf die Kontaktfläche 17 und umfasst im wesentlichen eine motorseitig offene Tasche 23,24 und eine endseitige Anschlagfläche 25,26. Zwischen den Anschlagflächen 25,26 und den Kohlebürsten 15,16 befindet sich eine Feder 27,28, welche die Kohlebürsten 15,16 in Richtung auf die Kontaktfläche 17 federnd vorspannen.

Die Kohlebürstenköcher 21,22 sind an Enden 30,31 von vorspringenden Armen 32,33 der Elektronikeinheit 7 angeordnet, und die Anzahl der Arme 32,33 entspricht der Anzahl der Kohlebürsten. Die Arme 32,33 erstrecken sich achsparallel zu der Welle 10 in Richtung auf den Kommutator 14 zu. Wie die Fig. 9 zeigt, durchgreifen die Arme 32,33 zwei parallel zur Welle 10 angeordnete Durchgangsbohrungen 34,35 des Aufnahmekörper 4. Die Arme 32,33 sind mit Dichtungselementen 36,37 versehen, welche an der Bohrungswandung anliegen. Die Durchgangsbohrungen 34,35 schließen zwischen einander einen Winkel von 180° ein. Es bleibt darauf hinzuweisen, dass sich im Inneren der Arme 32,33 Leiterelemente 38,39, Blechteile oder ähnliches erstrecken können, die zur elektrischen Kontaktierung der Kohlebürsten 15,16 dienen und zu elektrischen Anschlusselementen im Bereich der Elektronikeinheit 7 führen.

Nachstehend wir zunächst auf die Gemeinsamkeiten aller Ausführungsformen der Erfindung nach den Fig. 1 bis 5 eingegangen, um im Anschluß daran die jeweils unterschiedlichen Besonderheiten aufzuzeigen.

Die Erfindung beruht mit Blick auf die Fig. 1 bis 5 auf Besonderheiten in der Lagerung, der Kommutierung und auch der Verbohrung des Aggregates 1. Alle Ausführungsformen der Erfindung verfügen über eine geteilte Welle, wobei der Rotor 11 an einem motorgehäuseseitigen Ende - unter Umgehung der antreibenden Welle 10 - mit Hilfe einer drehfesten Achse 42 am Motorgehäuse 9 abgestützt ist. Ein besonderes Merkmal dieser geteilten Bauweise besteht darin, dass das Lastkollektiv der Achse 42 - im Vergleich mit der Welle 10 - reduziert ist. Denn die Länge der Achse 42 ist von Torsionsrückwirkungen frei gestellt. Mit anderen Worten hat die Achse 42 - im Vergleich mit der Welle 10 - keinerlei Torsionsbeanspruchung zu ertragen. Diesem Vorteil kann mit einem entsprechend Design der Achse 42 und des B-Lagers 43 in vorteilhafter Weise Rechnung getragen werden. Die Erfindung bewirkt folglich ein entschärftes Lastkollektiv in Hinblick auf die Rotorlagerung im Bereich von dem B-Lager 43.

Die Ausführungsformen nach den Fig. 1, 2 und 3 verfügen über eine Rotorlagerungskonfiguration nach Art eines Trägers auf zwei endseitigen Stützen, wobei das Excenterlager 41 zwischen A-Lager 40 und B-Lager 43 angeordnet ist.

Dabei ist nach Fig. 1, 2, 3 ein topfförmiges Motorgehäuse 9 durch einen Deckel 44 aus Kunststoffwerkstoff verschlossen, welcher im wesentlichen die Aufgabe besitzt, die Bürsten 15,16 zu tragen, und das Eindringen von Pumpenleckageflüssigkeit in das Motorinnere zu verhindern. Die Abdichtung erfolgt über eine vorzugsweise am Deckel 44 angespritzte Dichtung 45, und über einer dreiseitige Anlage der Dichtung 45 zwischen Deckel 44, Seite 3 sowie Innenwandung von dem Motorgehäuse 9. Weil der Kommutator 14 als Axialkommutator ausgebildet ist, besteht eine besonders positive Selbstreinigungseigenschaft der vorliegenden Erfindung darin, dass Verschmutzungen, insbesondere Leckageflüssigkeit wirksam von dem Kommutator 14 nach radial außen abgeschleudert wird.

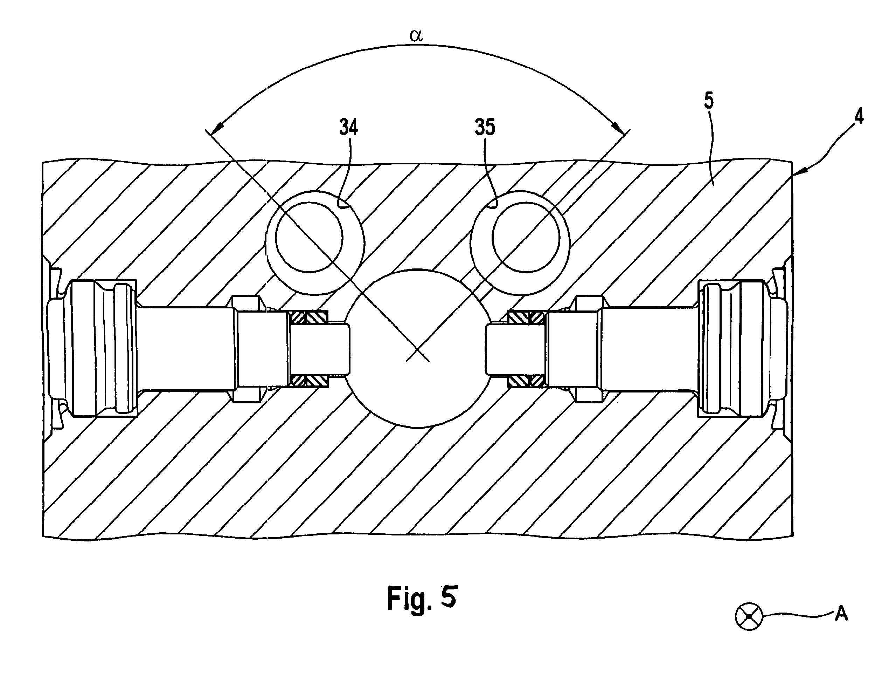

Zur Führung der Kohlebürsten 15,16 verfügt der Deckel 44 gemäß Fig. 1 bis 3 über einstückig angeformte Kohlebürstenköcher 21,22, die parallel zur Welle 10 angeordnet sind. Zu diesem Zweck ist jeweils ein zylindrischer Stutzen 46 vorgesehen, welcher in den Aufnahmekörper 4 eingreift. Nach Fig. 5 schließen die Kohlebürstenköcher 21 - und daher auch die entsprechenden Durchgangsbohrungen 34,35 - einen Winkel α mit weniger als 180 ° ein. Eine besonders vorteilhafte Antriebsvariante verfügt über einen 4-poligen Motor mit nur 2 Kohlebürsten 15, 16, die einen Winkel α von 90° einschließen. Wie Fig. 5 erkennen lässt, ist die Konfiguration eines derartigen Aggregates so arrangiert worden, dass innerhalb des beschriebenen Winkels α keine Aufnahmebohrung für eine Pumpe verläuft. Dadurch wird es ermöglicht die beiden durchgehenden Aufnahmebohrungen 34,35 für die Kohlebürstenköcher 21,22 trotz großer Raumnot im Inneren von dem Aufnahmekörper 4 zu platzieren.

Um die Herstellung des Elektromotors 2 als selbständige Unterbaugruppe bei einem Zulieferer zu vereinfachen, weists der Deckel 44 eine Not-Lagerungsfunktion für eine Testinbetriebnahme auf. Zu diesem Zweck ist der Deckel 44 gewissermaßen als geschlossene Schottwand ausgebildet, die einen engen Wellendurchlass mit einem provisorischen Gleitlager 47 aufweist. Nach der Montage des Aggregates 1 werden Lagerkräfte dagegen im wesentlichen vollständig von A- und B-Lager 40,43 in das Gehäuse eingeleitet. Es ist ersichtlich, dass Axialkräfte über ein Axiallager in den Aufnahmekörper 4 eingeleitet werden. Die Zentrierung des Motors erfolgt, indem der Deckel 44 mit einem zentrischen, napfförmigen Zentriervorsprung 48 versehen ist, der gleichzeitig das provisorische Gleitlager 47 trägt, und in eine Stufenbohrung von dem Gehäuse 5 einschiebbar ist. Eine Stirnseite von dem Zentriervorsprung 48 ist mit einer Armierung 49 versehen, damit das Exzenterlager 41 in axialer Richtung A anlaufen kann.

Zur Reduktion der Baulänge wird das motorseitige B-Lager 43 zumindest teilweise von einem Wicklungsträger 29 des Rotors 11 übergriffen. Dadurch wird es ermöglicht, dass die Radialkräfte nahe dem Zentrum der Massenkräfte des Rotors 11 aufgenommen werden.

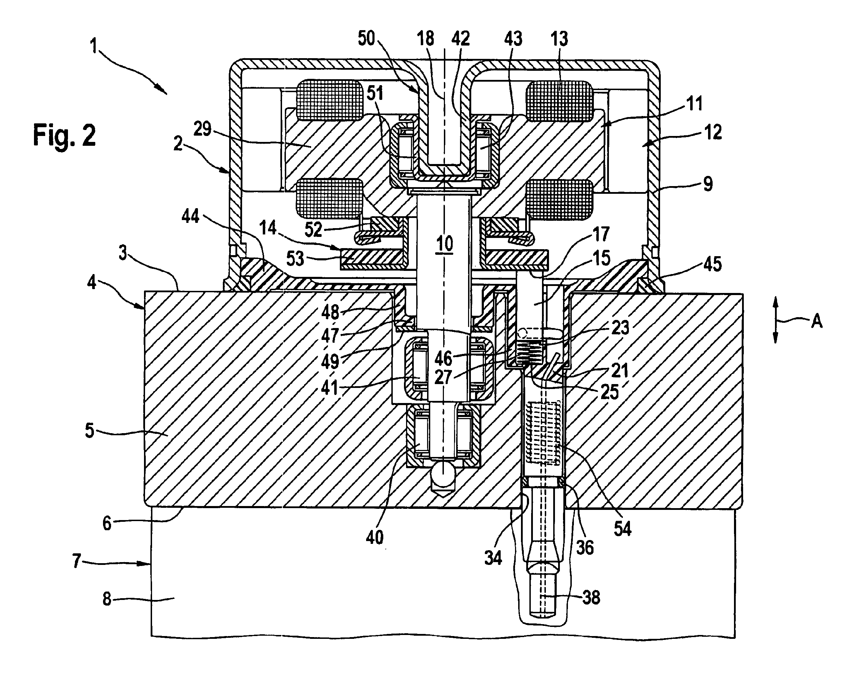

Aus den Fig. 1 bis 3 geht hervor, dass das Motorgehäuse 9 einen Napf 50 aufweist. Prinzipiell kann der Napf 50 konkav in Richtung Motorinnenraum oder konvex in Richtung Umgebung ausgestülpt sein. Der Napf 50 ist einstückig aus dem Werkstoff des Motorgehäuse 9 geprägt oder gezogen und dient der Aufnahme der Achse 42. Die Besonderheit dieser gewichtsoptimierten Ausführungsform besteht darin, dass die Achse 42 nicht aus Vollwerkstoff gebildet ist. Gemäß Fig. 2 ist die Achse 42 aus dem vergleichsweise duktilen Werkstoff des Motorgehäuse 9 ausgebildet. Um eine definierte und möglicht harte, reibungsarme Lauffläche für das B-Lager 43 zu ermöglichen, trägt die Achse 42 einen zusätzlichen, zumindest teilweise gehärteten Napf 51.

Gemäß Fig. 1 verfügt das Motorgehäuse 9 über einen Napf 50, welcher konvex nach außen geprägt ist. Dieser dient zu dem Zweck, eine vergleichsweise kurze, stummelartige Achse 42 aufzunehmen, die von der drehmomentübertragenden Welle 10 abgetrennt ist. Die Welle 10 befindet sich in geringem axialen Abstand zu der Achse 42. Die Welle ist mit einem Rotations-Translationswandler (Getriebe,Exzenter) versehen, um nicht gezeichnete Pumpenkolben anzutreiben, die einander - unter gewisser Deaxierung - diametral gegenüber liegen.

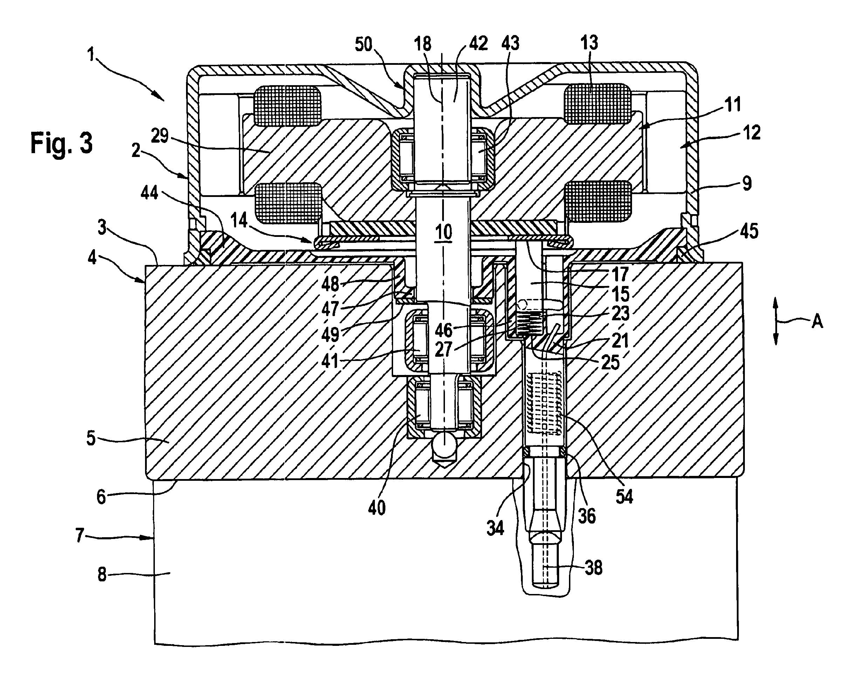

Zwecks Reduktion axialer Reibungskräfte verfügt ein Kurbelraumboden über ein kugelförmiges Lagerungselement. Eine B-Lager-seitige Stirnseite der Welle 10 ist mit einem linsenkopf-förmigen Vorsprung versehen. Zwecks Reibungsminderung kann der Vorsprung axial direkt gegen eine Stirnseite von der Achse 42 (Fig. 1,3) oder indirekt über einen Boden von Napf 51 an der Achse 42 anlaufen (Fig. 2).

Eine Besonderheit der Ausführungsformen nach Fig. 1,2 besteht darin, dass der Kommutator 14 mehrteilig ausgebildet ist. Dabei sind wesentliche Bauteile durch eine mechanische Steckverbindung unter gleichzeitiger elektrischer Kontaktierung zwischen Wicklungen und Kommutatorlamellen miteinander verbunden. Wie zu sehen ist, befinden sich Kommutatorhaken axial hinter der Kontaktfläche 17 für Kohlebürsten 15,16. Der Kommutator 14 umfasst zu diesem Zweck ein weitgehend scheibenförmiges Bauteil 52, welches mit Wicklungsdrähten verbunden ist, sowie ein buchsenförmiges Bauteil 53 mit L-ProfilQuerschnitt, dessen L-Schenkel zur Auflage der Bürsten 15,16 dient. Es versteht sich, dass das Bauteil 53 durch die Steckverbindung auch elektrisch mit den jeweiligen Wicklungen 13 in Verbindung steht.

Die Figur 3 verdeutlicht dagegen einen Kommutator 14, welcher nahezu völlig plan, sowie einstückig ausgebildet ist, und wobei Kommutatorhaken radial außerhalb von der Kontaktfläche 17 für Kohlebürsten 15,16 angeordnet sind. Ein Vorteil dieser Bauweise besteht, darin, dass die Baulänge noch weiter reduziert ist, was jedoch einen graduell vergrößerten Durchmesser bedingt.

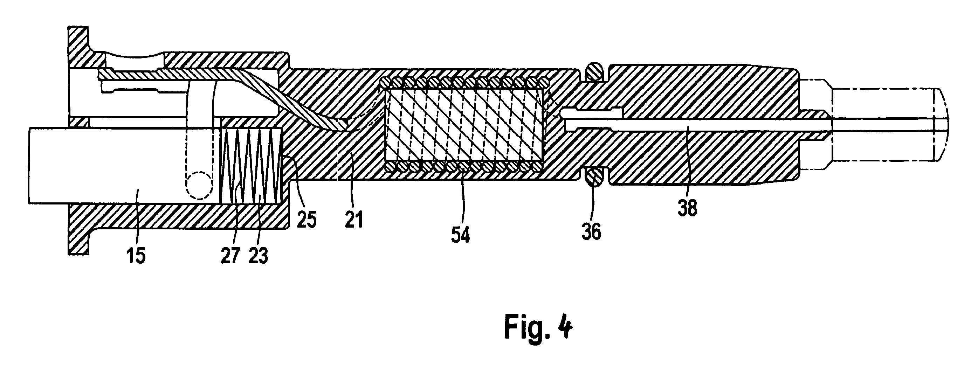

Bei einer Variante nach Fig. 4 sind gesonderte Kohlebürstenköcher 21,22 erforderlich, welche nicht Bestandteil der Motorbaueinheit sind.

Zur Entstörung ist es vorteilhaft, wenn die Kohlebürstenköcher 21,22 integrierte Entstörmittel 54 aufweisen, so wie es in Fig. 4 beispielhaft verdeutlicht ist. Zu diesem Zweck besteht jeder Kohlebürstenköcher 21,22 vorwiegend aus Kunststoffwerkstoff, und die Entstörmittel sind in den Kunststoff eingelegt oder von diesem umspritzt. Beispielsweise ist in der Stromzuführung eine elektrische Entstörspule integriert vorgesehen, deren Achse parallel zu der Motorwelle 10 verläuft. Ein Entstörkondensator kann ebenfalls entweder integriert oder auf einer Platine von der Elektronikeinheit 7 angeordnet sein.

Im folgenden nochmals eine kurze und prägnante Zusammenfassung besonderer Merkmale von Ausführungsformen der Erfindung:

Es wird ein Gleichstrommotor zum Antrieb von Pumpen für elektronische Bremssysteme mit folgenden Merkmalen vorgeschlagen:
- Rotor/Wicklungsträger mit tiefer Lager-Ausnehmung für axial und radial integrierte Aufnahme des B-Lagers; vorzugsweise einteiliger Sinter-Rotor mit innenliegendem B-Lager; direkte Aufnahme der B-Lagerkräfte nahe vorzugsweise im Rotorschwerpunkt
- Sinterbauweise für geringe Trägheits- und Massenkräfte
- Welle mit Getriebe-Excenter einpressbar in gesinterten Wicklungsträger möglich
- Welle mit Getriebe-Excenter und Wicklungsträger in einstückiger Bauweise möglich
- Von der Welle abgetrennte B-Lagerachse fest im Motorgehäuse anordbar (siehe Fig. 1; Verschweißung insbesondere Kondensatorschweißung ist möglich)
- B-Lager als Gleitlager (insbesondere als Teflonbuchse) ausbildbar - dadurch verbesserte Miniaturbauweise
- axiale Wellenabstützung durch Kugel im Ventilblock und Linsenkopf an der Welle oder an der abgetrennten B-Lager-Achse möglich
- Wicklung liegt hinter der axialen Projektion eines Axialkommutators, dieser kann als zweigeteilter Kollektor mit steckbarer Kontaktierung zwischen Kommutierungsfläche und Wickelhaken ausgeführt sein (Fig. 1,2)
- Kohlebürstenköcher innerhalb des Aufnahmekörpers angeordnet
- Kohlebürstenköcher als Stecker (ECU-seitig ein männlich oder weiblich ausgebildetes Steckteil); Kohlebürstenköcher mit integriertem elektrischen Stecker zum elektrischen Anschluss an die elektronische Steuereinheit (Multifunktionalität)
- bauliche Einheit von Motor-Deckel und axial gerichteten Kohlebürstenköchern (Fig. 1,2,3)
- Kohlebürstenköcher als gesondertes Steckelement beinhaltend: Kohlebürsten, Entstörmittel wie insbesondere Spule, Kondensator, elektr. Steckverbinder zur ECU, integrierte hydraulische Abdichtung (Fig.5)

### Bezugszeichenliste

- 1: Elektrohydraulisches Aggregat
- 2: Elektromotor
- 3: erste Seite
- 4: Aufnahmekörper (HCU)
- 5: Gehäuse
- 6: zweite Seite
- 7: Elektronikeinheit (ECU)
- 8: Gehäuse
- 9: Motorgehäuse
- 10: Welle
- 11: Rotor
- 12: Stator
- 13: Wicklung
- 14: Kommutator
- 15: Kohlebürste
- 16: Kohlebürste
- 17: Kontaktfläche
- 18: Drehachse
- 19: Mittel
- 20: Mittel
- 21: Kohlebürstenköcher
- 22: Kohlebürstenköcher
- 23: Tasche
- 24: Tasche
- 25: Anschlagfläche
- 26: Anschlagfläche
- 27: Druckfeder
- 28: Druckfeder
- 29: Wicklungsträger
- 30: Ende
- 31: Ende
- 32: Arm
- 33: Arm
- 34: Durchgangsbohrung
- 35: Durchgangsbohrung
- 36: Dichtelement
- 37: Dichtelement
- 38: Leiterelement
- 39: Leiterelement
- 40: A-Lager
- 41: Excenterlager
- 42: Achse
- 43: B-Lager
- 44: Deckel
- 45: Dichtung
- 46: Stutzen
- 47: Gleitlager
- 48: Zentriervorsprung
- 49: Armierung
- 50: Napf
- 51: Napf
- 52: Bauteil
- 53: Bauteil
- 54: Entstörmittel
- 55: Stützlager

- A: Axialrichtung

## Patentansprüche

1. Elektrohydraulisches Aggregat (1) zur Wandlung von elektrischer in mechanische Energie, umfassend einen Elektromotor (2) mit einem Stator (12) umfassend Magnete und mit einem Rotor (11) umfassend elektrische Wicklungen (13) auf einem Wicklungsträger (29), die elektromagnetische Felder erzeugen, wenigstens eine Anschlusskomponente zur Verbindung der Wicklungen (13) mit wenigstens einer Energieversorgung, wobei die Anschlusskomponente wenigstens eine Durchgangsbohrung (34,35) durchgreift, die Durchgangsbohrung (34,35) in einem Aufnahmekörper (4) vorgesehen ist, welcher elektrohydraulische Ventile sowie wenigstens eine, mit dem Elektromotor (2) getrieblich mittels eines Exzenterlagers (41) verbundene, Kolbenpumpe zur Energieversorgung einer schlupfgeregelten Bremsanlage aufnimmt, sowie mit einem topfförmigen Motorgehäuse, das durch einen mehrere Kohlebürsten (15, 16) tragenden Deckel (44) verschlossen ist und mit einer Rotorlagerung, umfassend wenigstens zwei beabstandete Lager, von denen mindestens ein sogenanntes A-Lager (40) eine Welle (10) im Aufnahmekörper (4) abstützt und ein im Rotor (11) aufgenommenes, sogenanntes B-Lager (43) im topfförmigen Motorgehäuse (9) abgestützt ist, **dadurch gekennzeichnet, dass** der Rotor (11), unter Umgehung der Welle (10), über das an einer drehfesten, stummelartigen Achse (42) angeordnete B-Lager (43) am Motorgehäuse (9) abgestützt ist, wobei die an einem Topfboden des Motorgehäuses (9) angeordnete Achse (42) in einem geringen axialen Abstand von der drehmomentübertragenden Welle (10) getrennt ist, und dass der Deckel (44) eine Not-Lagerungsfunktion für eine Testinbetriebnahme aufweist, wozu der Deckel (44) als geschlossene Schottwand ausgebildet ist, die einen engen Wellendurchlass mit einem napfförmigen, einen ein provisorisches Gleitlager (47) tragenden Zentriervorsprung (48) aufweist, der in eine Stufenbohrung des Aufnahmekörpers (4) eingeschoben ist.

2. Elektrohydraulisches Aggregat nach Anspruch 1, **dadurch gekennzeichnet, dass** zwischen A- und B-Lager (40,43) das Excenterlager (41) vorgesehen ist.

3. Elektrohydraulisches Aggregat nach Anspruch 1 oder 2, **dadurch gekennzeichnet, dass** A- und B-Lager (40,43) entweder einheitlich oder wechselweise unterschiedlich als Wälzlager und/oder als Gleitlager ausgebildet sind.

4. Elektrohydraulisches Aggregat nach Anspruch 1, **dadurch gekennzeichnet, dass** die am Topfboden angeordnete Achse (42) in Richtung des Topfinneren weist.

5. Elektrohydraulisches Aggregat nach Anspruch 1 oder 4, **dadurch gekennzeichnet, dass** die Achse (42) in Axialrichtung (A) in eine Ausnehmung von dem Wicklungsträger (29) eingreift.

6. Elektrohydraulisches Aggregat nach Anspruch 1, 4 oder 5, **dadurch gekennzeichnet, dass** das Motorgehäuse (9) eine Aufnahme für die Achse (42) aufweist, und dass die Achse (42) in die Aufnahme eingesetzt, eingepresst oder eingeschweißt ist, wobei die Aufnahme als Napf (50) vorgesehen ist.

7. Elektrohydraulisches Aggregat nach Anspruch 6, **dadurch gekennzeichnet, dass** der Napf (50) konvex nach außen gezogen ist, jedoch nicht über eine Ebene übersteht, welche von einem weitgehend planen Boden des Motorgehäuse definiert wird.

8. Elektrohydraulisches Aggregat nach Anspruch 6 oder 7, **dadurch gekennzeichnet, dass** der Napf (50) eine zylindrische Wandung und einen Boden aufweist, und dass der Boden wenigstens ein Durchgangsloch aufweist.

9. Elektrohydraulisches Aggregat nach Anspruch 1, 4 oder 5, **dadurch gekennzeichnet, dass** die Achse (42) einstückig am Motorgehäuse (9) ausgebildet ist, indem der Napf (50) konkav nach innen gezogen ist, und dass der Napf (50) konzentrisch zur Drehachse (18) angeordnet ist.

10. Elektrohydraulisches Aggregat nach Anspruch 9, **dadurch gekennzeichnet, dass** der Napf (50) eine zylindrische Abdeckung trägt, welche aus hartem Werkstoff besteht.

11. Elektrohydraulisches Aggregat nach Anspruch 1, **dadurch gekennzeichnet, dass** der Rotor (11) den Wicklungsträger (29) aufweist, wobei das B-Lager (43) in Axialrichtung (A) im wesentlichen vollständig in dem Wicklungsträger (29) integriert vorgesehen ist.

12. Elektrohydraulisches Aggregat nach Anspruch 11, **dadurch gekennzeichnet, dass** der Wicklungsträger (29) aus Sinterwerkstoff ausgebildet ist.

13. Elektrohydraulisches Aggregat nach Anspruch 12, **dadurch gekennzeichnet, dass** die Welle (10) zusammen mit dem Wicklungsträger (29) einteilig ausgebildet ist, und aus Sinterwerkstoff besteht.

14. Elektrohydraulisches Aggregat nach Anspruch 1, **dadurch gekennzeichnet, dass** der Rotor (11) einen axial gerichteten Kommutator (14) aufweist, welcher von Kohlebürsten (15,16) kontaktiert wird, welche parallel zur Drehachse (18) in der wenigstens einen Durchgangsbohrung (34,35) angeordnet sind.

15. Elektrohydraulisches Aggregat nach Anspruch 14, **dadurch gekennzeichnet, dass** der Aufnahmekörper (4) zwei Durchgangsbohrungen (34,35) für Kohlebürstenköcher (21,22) aufweist, welche einen Winkel von höchstens 180° oder weniger, vorzugsweise jedoch 90°, einschließen.

16. Elektrohydraulisches Aggregat nach Anspruch 15, **dadurch gekennzeichnet, dass** die Kohlebürstenköcher (21,22) mit integrierten Entstörmitteln (54) vorgesehen sind.

17. Elektrohydraulisches Aggregat nach Anspruch 14, **dadurch gekennzeichnet, dass** der Kommutator (14) mehrstückig ist, und aus wenigstens zwei Bauteilen (52,53) zusammen gefügt ist, wobei Kommutatorhaken für Wicklungen (13) und Kommutatorlamellen für Kohlebürsten (15,16) an voneinander trennbaren sowie durch stecken miteinander fügbaren Bauteilen (52,53) vorgesehen sind.

## Claims

1. Electrohydraulic assembly (1) for converting electrical energy into mechanical energy, comprising an electric motor (2) having a stator (12), which comprises magnets, and a rotor (11), which comprises electrical windings (13) on a winding support (29), which windings generate electromagnetic fields, comprising at least one connection component for connecting the windings (13) to at least one power supply, with the connection component passing through at least one passage bore (34, 35), the passage bore (34, 35) being provided in an accommodation body (4) which accommodates electrohydraulic valves and also at least one piston pump, which is connected in a geared manner to the electric motor (2) by means of an eccentric bearing (41), for supplying power to a slip-controlled brake system, and also having a pot-like motor housing which is closed by a cover (44) which is fitted with a plurality of carbon brushes (15, 16), and having a rotor bearing comprising at least two bearings which are spaced apart and of which at least a so-called A-bearing (40) supports a shaft (10) in the accommodation body (4) and a so-called B-bearing (43), which is accommodated in the rotor (11), is supported in the pot-like motor housing (9), **characterized in that** the rotor (11), in a manner bypassing the shaft (10), is supported on the motor housing (9) by means of the B-bearing (43) which is arranged on a rotationally fixed, stub-like spindle (42), with the spindle (42), which is arranged on a pot base of the motor housing (9), being separated from the torque-transmitting shaft (10) at a short axial distance, and **in that** the cover (44) has an emergency bearing function for commissioning a test, for which purpose the cover (44) is formed as a closed partition wall which has a narrow shaft passage with a cup-like centring projection (48) which is fitted with a provisional sliding bearing (47) and which is pushed into a stepped bore in the accommodation body (4).

2. Electrohydraulic assembly according to Claim 1, **characterized in that** the eccentric bearing (41) is provided between the A-bearing (40) and the B-bearing (43).

3. Electrohydraulic assembly according to Claim 1 or 2, **characterized in that** the A-bearing (40) and the B-bearing (43) are either uniform or are selectively differently in the form of a roller bearing and/or a sliding bearing.

4. Electrohydraulic assembly according to Claim 1, **characterized in that** the spindle (42) which is arranged on the pot base points in the direction of the pot interior.

5. Electrohydraulic assembly according to Claim 1 or 4, **characterized in that** the spindle (42) engages in a recess in the winding support (29) in the axial direction (A).

6. Electrohydraulic assembly according to Claim 1, 4 or 5, **characterized in that** the motor housing (9) has a receptacle for the spindle (42), and **in that** the spindle (42) is inserted, pressed or welded into the receptacle, with the receptacle being in the form of a cup (50).

7. Electrohydraulic assembly according to Claim 6, **characterized in that** the cup (50) is drawn outwards in a convex manner but does not project beyond a plane which is defined by a largely flat base of the motor housing.

8. Electrohydraulic assembly according to Claim 6 or 7, **characterized in that** the cup (50) has a cylindrical wall and a base, and **in that** the base has at least one passage hole.

9. Electrohydraulic assembly according to Claim 1, 4 or 5, **characterized in that** the spindle (42) is integrally formed on the motor housing (9) by the cup (50) being drawn inwards in a concave manner, and **in that** the cup (50) is arranged concentrically relative to the rotation axis (18).

10. Electrohydraulic assembly according to Claim 9, **characterized in that** the cup (50) is fitted with a cylindrical covering which is composed of a hard material.

11. Electrohydraulic assembly according to Claim 1, **characterized in that** the rotor (11) has the winding support (29), with the B-bearing (43) being provided such that it is substantially fully integrated in the winding support (29) in the axial direction (A).

12. Electrohydraulic assembly according to Claim 11, **characterized in that** the winding support (29) is formed from sintered material.

13. Electrohydraulic assembly according to Claim 12, **characterized in that** the shaft (10) is integrally formed together with the winding support (29) and is composed of sintered material.

14. Electrohydraulic assembly according to Claim 1, **characterized in that** the rotor (11) has an axially directed commutator (14) with which carbon brushes (15, 16) make contact, the said carbon brushes being arranged parallel to the rotation axis (18) in the at least one passage bore (34, 35).

15. Electrohydraulic assembly according Claim 14, **characterized in that** the accommodation body (4) has two passage bores (34, 35) for carbon brush cartridges (21, 22) which form an angle of at most 180° or less, but preferably of 90°.

16. Electrohydraulic assembly according to Claim 15, **characterized in that** the carbon brush cartridges (21, 22) are provided with integrated interference-suppression means (54).

17. Electrohydraulic assembly according to Claim 14, **characterized in that** the commutator (14) has several parts, and is made up of at least two components (52, 53), with commutator hooks for windings (13) and commutator laminations for carbon brushes (15, 16) being provided on components (52, 53) which can be separated from one another and can be joined to one another by plugging.

## Revendications

1. Ensemble électrohydraulique (1) permettant de convertir de l'énergie électrique en énergie mécanique et comprenant
un moteur électrique (2) doté d'un stator (12) comprenant des aimants et
un rotor (11) comportant des bobinages électriques (13) sur un porte-bobinage (29) et qui produit des champs électromagnétiques,
au moins un composant de raccordement qui permet de relier les bobinages (13) à au moins une alimentation en énergie, le ou les composants de raccordement traversant au moins un alésage de passage (34, 35), l'alésage de passage (34, 35) étant prévu dans un corps de réception (4) qui reprend des soupapes électrohydrauliques ainsi qu'au moins une pompe à piston qui alimente en énergie une installation de freinage régulée par glissement et reliée à transmission au moteur électrique (2) au moyen d'un palier décentré (41),
ainsi qu'un carter de moteur en forme de pot fermé par un couvercle (44) qui porte plusieurs balais de charbon (15, 16) et qu'un palier de rotor comportant au moins deux paliers situés à distance l'un de l'autre et dont au moins l'un, appelé palier A (40), soutient un arbre (10) dans le corps de réception (4) et un palier appelé B (43), repris dans le rotor (11), est soutenu dans le carter (9) en forme de pot du moteur, **caractérisé en ce que**
le rotor (11) entourant l'arbre (10) est soutenu sur le carter (9) du moteur par l'intermédiaire du palier B (43) disposé sur un axe (42) en forme de moignon, bloqué en rotation, l'axe (42) disposé sur le fond pot du carter (9) du moteur étant séparé par une petite distance axiale de l'arbre (10) qui transmet le couple de rotation et
**en ce que** le couvercle (44) présente une fonction de palier de secours pour une mise en service d'essai, le couvercle (44) étant dans ce but configuré comme cloison fermée qui présente un étroit passage d'arbre doté d'un palier coulissant provisoire (47) en forme de cuvette et portant une saillie de centrage (48) enfoncée dans un alésage en gradin du corps de réception (4).

2. Ensemble électrohydraulique selon la revendication 1, **caractérisé en ce que** le palier décentré (41) est prévu entre le palier A et le palier B (40, 43).

3. Ensemble électrohydraulique selon les revendications 1 ou 2, **caractérisé en ce que** le palier A et le palier B (40, 43) sont configurés d'un seul tenant ou en variante comme paliers à roulement et/ou paliers à glissement.

4. Ensemble électrohydraulique selon la revendication 1, **caractérisé en ce que** l'axe (42) disposé dans le fond de la cuvette est orienté en direction de l'intérieur du pot.

5. Ensemble électrohydraulique selon les revendications 1 ou 4, **caractérisé en ce que** l'axe (42) s'engage en direction axiale (A) dans une découpe du porte-bobinage (29).

6. Ensemble électrohydraulique selon les revendications 1, 4 ou 5, **caractérisé en ce que** le carter (9) du moteur présente un logement pour l'axe (42) et **en ce que** l'axe (42) est placé, enfoncé ou soudé dans le logement, le logement étant prévu comme cuvette (50).

7. Ensemble électrohydraulique selon la revendication 6, **caractérisé en ce que** la cuvette (50) est étirée de manière convexe vers l'extérieur mais ne déborde pas au-delà d'un plan défini par le fond largement plan du carter du moteur.

8. Ensemble électrohydraulique selon les revendications 6 ou 7, **caractérisé en ce que** la cuvette (50) présente une paroi cylindrique et un fond et **en ce que** le fond présente au moins un trou de passage.

9. Ensemble électrohydraulique selon les revendications 1, 4 ou 5, **caractérisé en ce que** l'axe (42) est formé d'un seul tenant sur le carter (9) du moteur par le fait que la cuvette (50) est étirée de manière concave vers l'intérieur et **en ce que** la cuvette (50) est disposée concentriquement par rapport à l'axe de rotation (18).

10. Ensemble électrohydraulique selon la revendication 9, **caractérisé en ce que** la cuvette (50) porte un couvercle cylindrique constitué d'un matériau dur.

11. Ensemble électrohydraulique selon la revendication 1, **caractérisé en ce que** le rotor (11) présente le porte-bobinage (29), le palier B (43) étant intégré essentiellement complètement dans le porte-bobinage (29) dans la direction axiale (A).

12. Ensemble électrohydraulique selon la revendication 11, **caractérisé en ce que** le porte-bobinage (29) est formé d'un matériau fritté.

13. Ensemble électrohydraulique selon la revendication 12, **caractérisé en ce que** l'arbre (10) est formé d'un seul tenant avec le porte-bobinage (29) et est constitué d'un matériau fritté.

14. Ensemble électrohydraulique selon la revendication 1, **caractérisé en ce que** le rotor (11) présente un commutateur (14) orienté axialement et en contact avec les balais de charbon (15, 16) disposés parallèlement à l'axe de rotation (18) dans le ou les alésages de passage (34, 35).

15. Ensemble électrohydraulique selon la revendication 14, **caractérisé en ce que** le corps de réception (4) présente deux alésages de passage (34, 35) pour des porte-balais tubulaires (21, 22) qui forment un angle d'au plus 180° ou moins et de préférence de 90°.

16. Ensemble électrohydraulique selon la revendication 15, **caractérisé en ce que** les porte-balais tubulaires (21, 22) sont dotés de moyens intégrés de déparasitage (54).

17. Ensemble électrohydraulique selon la revendication 14, **caractérisé en ce que** le commutateur (14) est réalisé en plusieurs pièces et est constitué de l'assemblage d'au moins deux composants (52, 53), des crochets de commutateur étant prévus pour les bobinages (13) et des lamelles de commutateur pour les balais de charbon (15, 16) sur des composants (52, 53) séparables l'un de l'autre mais aptes à être assemblés l'un à l'autre par enfichage.
